# EUROPEAN PATENT SPECIFICATION

(11) **EP 2 359 573 B1**
(45) Date of publication and mention of the grant of the patent: **18.02.2015**
(21) Application number: 08876319.8
(22) Date of filing: 18.12.2008
(51) Int. Cl.: H04L 29/08

(54) **METHOD FOR CONTENT DELIVERY INVOLVING A POLICY DATABASE**
VERFAHREN ZUR LIEFERUNG VON INHALTEN UNTER BERATSCHLAGUNG EINER POLICY DATENBANK
PROCÉDÉ DE DISTRIBUTION DE CONTENU COMPRENANT UNE BASE DE DONNÉES DE RÈGLE

(43) Date of publication of application: 24.08.2011
(73) Proprietor: Telefonaktiebolaget L M Ericsson (publ), 164 83 Stockholm (SE)
(72) Inventor: KARLSSON, Per, S-146 52 Tullinge (SE); SOUZA, Victor, S-170 69 Solna (SE)
(74) Representative: Sjöberg, Mats Hakan
(86) International application number: PCT/SE2008/051507
(87) International publication number: WO 2010/071516

(56) References cited:
- WO-A-03/071727
- US-A1- 2004 088 348
- US-A1- 2007 204 115
- US-A1- 2007 237 133

## Description

### TECHNICAL FIELD OF THE INVENTION

The present invention relates to a method and a system for content delivery.

### BACKGROUND

A content delivery network or content distribution network (CDN) is a system of computers (such as content servers) networked together across the Internet and that delivers content (especially media content) to clients. Content delivery networks are difficult to control and manage as requests for content come from different locations sometimes following certain viewing patterns. In order to optimize performance, locations of the content servers and media content close to the client may be chosen. Many parameters have to be taken into account to optimize the media delivery in content delivery networks, for example:
- Number of content servers
- Locations of the clients and the content servers
- Location of an asset (media content)
- Popularity of an asset
- Available bandwidth in the network
- Cost for moving a content
- Processing capabilities

The number of parameters and unpredictability when it comes to user behavior makes this problem very complex if one wants to control a global CDN using a central management system.

Existing solutions try to solve this problem in a centralized approach. Taking all the parameters into account the different solutions try to best place content in the network. However, the dynamicity of such an environment makes the algorithms highly complex and global decisions take a long time to be made and effectuated.

Another technical area relevant to the current invention is mobile objects (also called mobile agents). Mobile objects are programs (software) and associated data that can migrate from host to host in a network at times and to places of their own choosing. In the new host they can then continue to run, possibly interacting with the local execution environment. Mobile objects have for example been discussed in the paper 'Mobile Agents and the Future of the Internet' by Kotz et al published in 'ACM Operating Systems Review, August 1999 pp 7-13. An example of using mobile agents is disclosed in US patent 7,254,608. This patent discloses a system and a method for using mobile agents for managing distribution of content in peer-to-peer networks. In the patent the mobile agent may visit the peer nodes on an itinerary to search for and collect information on distributor content stored on the visited, peer.

### SUMMARY

The present invention relates to the problem of how to avoid the disadvantages mentioned above of managing a content delivery network I, as disclosed for example in US-A1-2007/237133.

The problem is in the current invention solved by placing the content itself (such as media files) in the mobile objects (agents). The invention comprises a content delivery system for delivering content to clients where the content itself (such as media files) is placed within the mobile objects (agents). This content delivery system comprises at least one mobile object adapted to be executed on the content delivery system but also adapted to be executed on other content delivery systems or multimedia devices adapted to execute mobile objects. What characterizes these mobile objects is that they comprise:
- a media file accessible by the client,
- a policy data base and
- execution logic.

The execution logic is adapted to determine the capabilities of the other content delivery systems or multimedia devices.

The execution logic is also adapted to alternatively
- monitor data related to the client's access of the media file, and to interrogate the policy data base and to copy the mobile object excluding the media file towards the other content delivery system or multimedia device when certain conditions stored in the policy data base are met.
- or to receive a request for the media file from the client and to copy the mobile object excluding the media file towards the other content delivery system or multimedia device.

The content delivery system does also include a transcoder unit adapted to transcode the media file prior sending it to other content delivery systems or multimedia devices having limited capabilities.

The invention does also include a method for placing content in the content delivery system or multimedia device.

In the method, the mobile object (comprising the policy data base and the media file accessible by the client as described above) executes in one content delivery system. The mobile object either:
- monitors data related to the client's access of the media file and when certain conditions stored in the policy data base are met, the mobile object sends a copy of itself excluding the media file to the other content delivery system or multimedia device
- or when receiving a request from the client, a copy of the mobile object excluding the media file is sent to the other content delivery system or multimedia device.

After sending the copy excluding the media file, the mobile object also determines the capabilities of the other content delivery system or multimedia device. If the capabilities in the other content delivery system or multimedia device are restricted, the media file is transcoded before it is sent to the copy of the mobile object in the content delivery system or multimedia device.

The invention further includes a method and a multimedia device for receiving and executing mobile objects comprising media files.

The current invention makes the content (e.g., a media file) autonomous. By autonomous is here meant that the mobile object is intelligent enough to monitor data related to the client's access of the media file (e.g., number of times the media file has been downloaded, local link utilization measurements, link costs, etc) and to determine capabilities of other content delivery systems or multimedia devices and to take appropriate decisions. Instead of utilizing a central server (or a couple of servers) to gather global information and take global decisions the invention comprises a mobile object that takes local decisions based on local information. This will highly simplify the way content is placed and controlled through content delivery networks.

The objective with the current invention is therefore to overcome at least one of the disadvantages mentioned above.

The invention has several advantages:
Content such as media files can be placed in content delivery systems and multimedia devices having limited capabilities.

Efficient utilization of radio link (e.g., GPRS) and network resources (e.g., more powerful network-based execution environments).

Avoid utilizing scarce resources on the device with limited resources.

Allow mobile objects residing in portable devices to be utilized by the content delivery system.

Enhanced end-user experience (faster transcoding time, faster download time).

Robustness; the system is more robust since it features strong fault isolation characteristics. The mobile objects are independent pieces of software relying on the local environment and not on centralized systems. It is harder to launch a denial of service attack towards such a distributed system.

No central point of failure; equal distribution of control and management functionalities brings a nice load distribution and no central point of failure.

Simplicity; the complexity of traditional global optimization algorithms is eliminated by allowing local decisions based on local knowledge to be taken.

Lower maintenance / management costs; simplicity leads to lower cost of maintenance of the entire system.

The invention will now be described in more detail and with preferred embodiments and referring to accompanying drawings.

### BRIEF DESCRIPTION OF THE DRAWINGS

Figure 1 is a block diagram illustrating a content delivery network.
Figure 2 is a block diagram illustrating an embodiment of a content delivery system and a mobile object.
Figures 3a and 3b are flow charts showing a method of placing content in a content delivery network.
Figure 4a is a block diagram illustrating an embodiment of content delivery systems in a content delivery network.
Figure 4b is a block diagram illustrating an embodiment of an implementation of the content delivery system.
Figure 5 is a block diagram illustrating an embodiment of a content delivery system.
Figure 6 is a block diagram illustrating an embodiment of a content delivery system.
Figure 7 is a flow chart showing a method of placing content in a content delivery system.
Figure 8 is a flow chart showing the method of placing content in a multimedia device.
Figure 9 is a block diagram illustrating different types of mobile objects.
Figure 10 is a flow chart showing a method of receiving content in a multimedia device.

### DETAILED DESCRIPTION

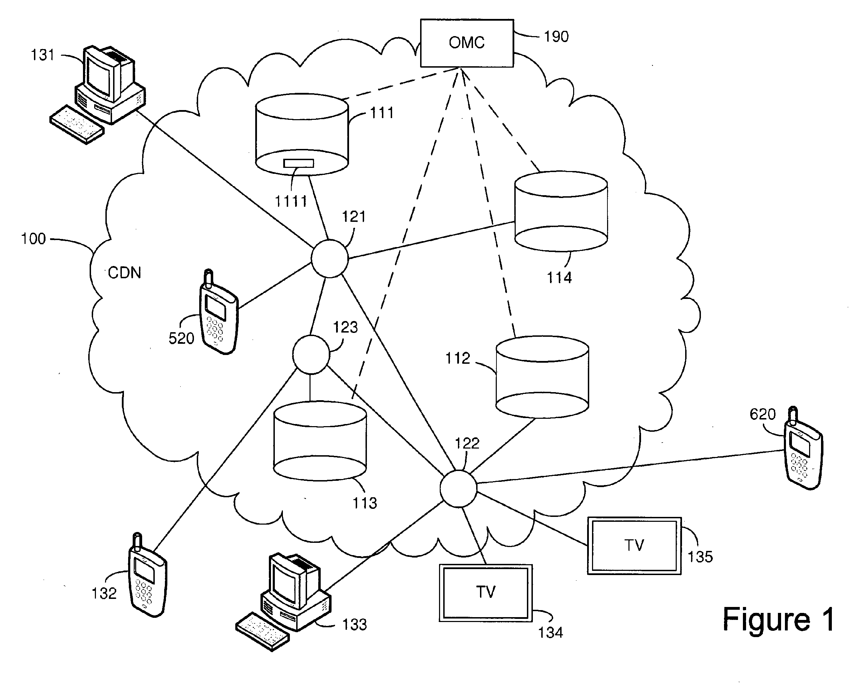

Figure 1 illustrates an example of a content delivery network CDN 100. The CDN 100 comprises in this example, four content servers 111, 112, 113 and 114. These content servers 111-114 are interconnected by a network comprising a number of routers or switches 121, 122 and 123. In content server 111, a media file 1111 is stored. The media file 1111 can in this example be accessed by seven different clients 131-135, 520,620. As a majority of the clients are located closer to server 112 than server 111, it is worth to consider moving the content, i.e., the media file 1111 from server 111 to server 112. Closer can here be a network based distance, e.g., number of node hops in between the server 111, 112 and the clients 131 etc. By moving the content closer to the clients 133-135 and 620 transmission resources are saved in the network 100, there will be lower delays and the response time will be faster.

In known prior art, the content servers 111, 112, 113 and 114 are managed by a central operation and management center, OMC 190. As discussed above, this solution has a number of drawbacks.

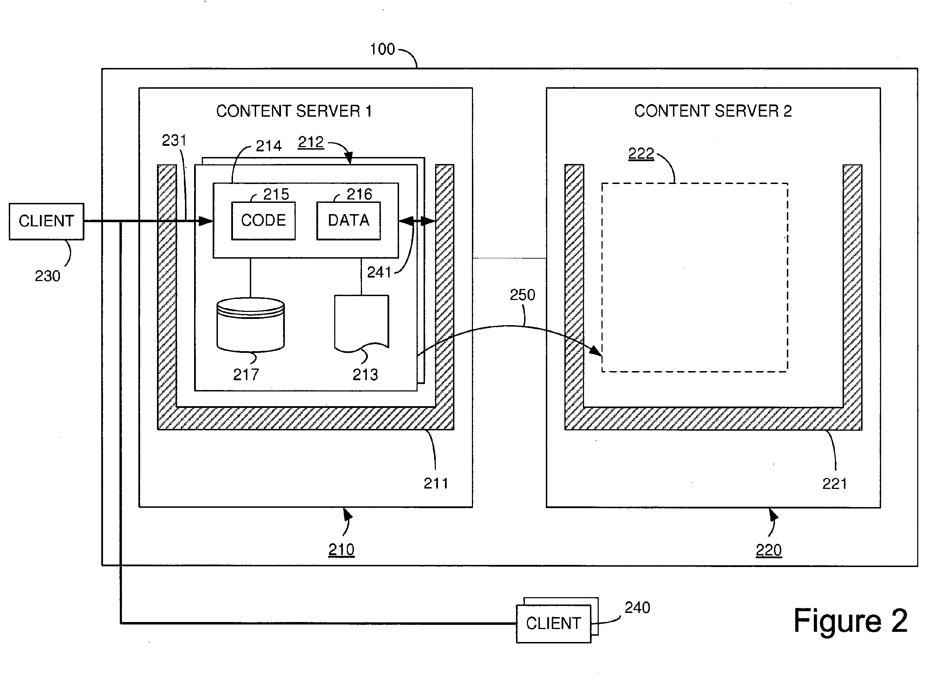

Figure 2 describes an embodiment of a content delivery system, here a Content Server 1 210 and a mobile object 212 according to the current invention. Content Server 1 210 comprises an execution environment 211 and at least one mobile object 212. The mobile object 212 comprises a media file 213. This media file 213 could be a data file such as a film, a streaming video, a game, an audio file, a document etc that can be accessed in action 231 by a client 230, 240 for on-line viewing or for download.

The mobile object 212 further comprises execution logic 214. The execution logic comprises program code 215 and a data area 216 that is used to execute the mobile object 212. The execution logic 214 is also handling requests in action 231 from the clients 230, 240 that want to access the media file 213. The programming language for the program code 215 could preferably be Java which has been the most used programming language to implement mobile objects as it is platform independent. The data area 216 comprises also data related to the client's 230, 240 access of the media file 213 as for example:
- Number of active connections (between the clients 230, 240 and the mobile object 212).
- Number of total accesses to the mobile object 212.
- Number of times the media file 213 has been accessed per time unit (e.g., number of accesses per minute).
- Location of the clients 230, 240 accessing the media file 213 (using for example the source IP address of the clients 230, 240).
- Location of other servers.

In addition to monitor data in the data area 216 in the mobile object 212, the execution logic 214 is also adapted to monitor in action 241 data related the execution environment 211 as for example:
- Available bandwidth and/or processor load.
- Available communication links between the content server 210 and the clients 230, 240.
- Communication link usage and/or link costs.

The mobile object 212 further comprises a policy data base 217. This data base 217 is adapted to comprise any kind of application specific policies that can trigger actions by the mobile object 212 as for example:
- The maximum and minimum acceptable number of accesses to the media file 213 per time unit.
- The maximum and minimum acceptable bandwidth to be consumed by the mobile object 212.
- The maximum network cost of transmission of a media file (213).

Furthermore, utilizing the inventive concept a skilled person can create different policies and corresponding behaviors that are more suitable and tailored to the management of a particular content delivery network.

Using the data 216 related to the access of the media file 213 and the execution environment 211 and interrogating the policy data base 217, the execution logic 214 can for example determine that a majority of the clients 240 accessing the media file 213 are located close to another server, Content Server 2 220.

Fulfilling certain conditions stored in the policy data base 217 the execution logic 214 may trigger a process to move, in action 250, the mobile object 212 from Content Server 1 210 to Content Server 2 220 which has its own execution environment 221.

In this process the mobile object 212 may stop serving requests from the clients 230, 240. Active connections with clients 230, 240 are paused. The clients 230, 240 are informed about the pause by the mobile object 212 using suitable signaling protocols (e.g., a modified TCP). This signaling is normally demanding some support from the execution environment 211 and underlying operating system. The execution environments 211 and 221, on the other hand, do not know where the mobile object 212 came from or where it is going next.

In the process of moving, the mobile object 212 moves from the original Content Server 1 210 to Content Server 2 220 without leaving any traces in Content Server 1 210.

Fulfilling other conditions stored in the policy data base 217 the execution logic 214 may trigger a process to copy the mobile object 212 from Content Server 1 210 to a new mobile object 222 in Content Server 2 220. In this case, the mobile object 212 in Content Server 1 210 continues to execute in parallel with the copy 222.

The copy 222 of mobile object 212 could either be adapted to keep its execution states when starting to execute in Content server 2 220 or it could be adapted to reset the execution states prior the execution.

In order for clients not previously connected to find the new location of the mobile object 222, a name resolution process is started using for example DNS (Domain Name Service) redirection.

A situation that also can occur is that very few (or no) clients at all have accessed the media file 213 for a certain period of time. This can be an indication that the media file 213 has become less popular or that the clients 240 are located close to another Content Server 2 220 already hosting a copy of the media file 213. In this situation, the execution logic 214 can take a decision to simply let the mobile object 212 in Content Server 1 210 'die' and delete itself.

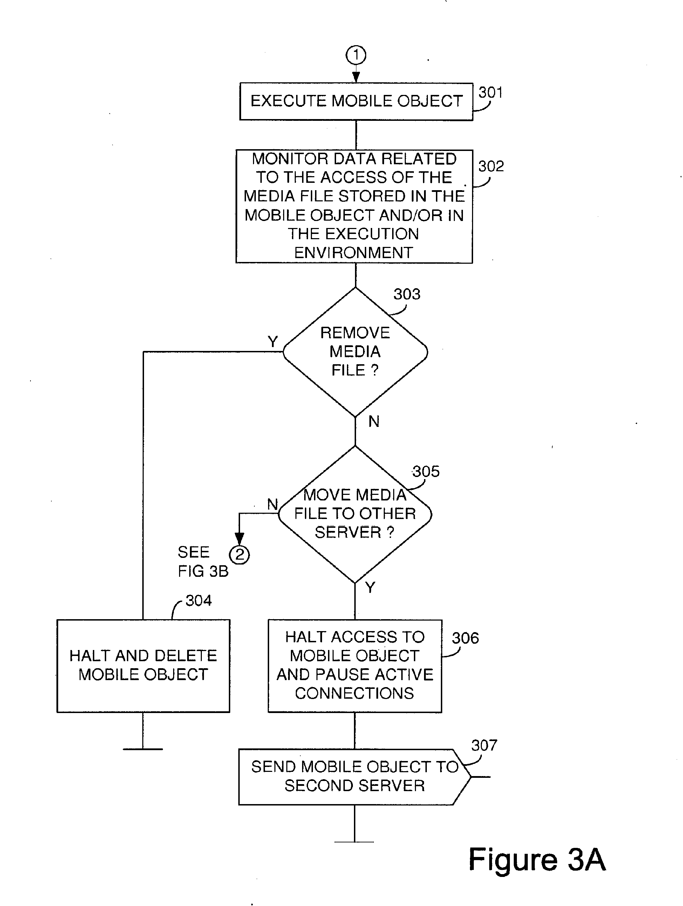

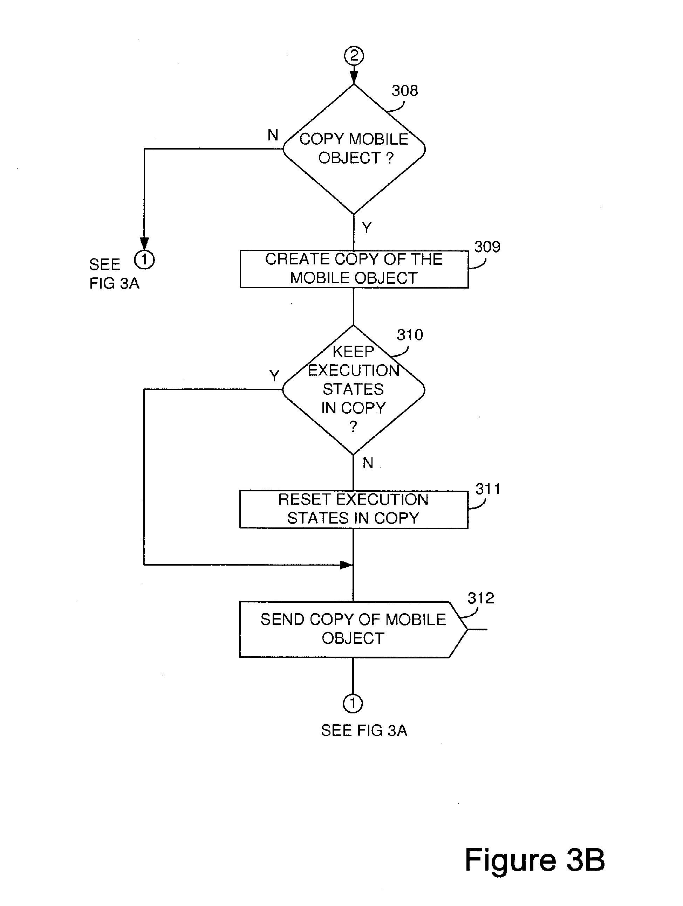

The flow charts in Figures 3a and 3b illustrate an embodiment of the method of placing content in a content delivery network 100 according to the current invention. The mobile object 212 is executing in the original server 210 in step 301. During execution it monitors in step 302 data related to the client's access of the media file 213. This data can be collected by the mobile object itself 212 and stored in the data area 216. The data can also be located in the execution environment 211 and accessed in action 241 by the mobile object 212.

In step 303, a check is made if the media file 213 can be deleted. If a certain period of time has lapsed without any client 230, 240 accessing the media file 213 or that the media file 213 has been accessed very seldom, the mobile object 212 can make the decision to halt the execution and delete itself in step 304. The conditions for this are stored in the policy data base 217. If, on the contrary, the media file 213 is very popular but mainly accessed by clients 240 located closer to the other content server 220, the mobile object 212 makes the decision in step 305 to move the mobile object 212 to the other server 220. But before sending the mobile object to the other content server 220 in step 307, the mobile object 212 halts in step 306 the access to the media file 213 and pauses the active connections between clients 230, 240 and the mobile object 212.

If the decision in step 305 is to not move the media file 213, the flow chart continues (digit '2' encircled) in Figure 3b.

If the media file 213 is popular in both regions where clients 230 (close to Content Server 1 210) and clients 240 (close to Content Server 2 220) are located, the mobile object 212 can make the decision in step 308 (now turning to Figure 3b) to copy itself in step 309 instead of moving. Before the copy 222 of the mobile object 212 is sent to Content Server 2 220, a check is made in step 310 if the current execution states stored in data area 216 in the copy 222 is to be kept or reset. If the states are to be kept, the copy 222 (a 'clone') of the mobile object 212 is sent in step 312 to content server 2 220. If the states are to be reset, the states are reset in step 311 and the copy 222 (a new 'instance') is sent in step 312. After sending the copy 222 in step 312 the process starts all over again (digit '1' encircled) as illustrated by Figure 3a. This is also the case if the mobile object 212 decides to not copy itself in step 308.

Yet another aspect of the invention is that the content delivery system 220 can be seen as a content delivery endpoint (source of content) that is created dynamically when the mobile object 212 is moved or copied into the execution environment 221. As an example, a server that is originally not a content server but having an execution environment 221 adapted for mobile objects in general can become a Content Server 2 220 when the mobile object 212 according to the invention is copied or moved into the execution environment 221 in the server 220.

The current invention is in the embodiments described above applied to a mobile object 212 that is moved and/or copied from one content server 210 to another content server 220. The inventive concept does also allow for the mobile object 212 to migrate between other content delivery systems or to other systems or devices adapted to execute mobile objects 212.

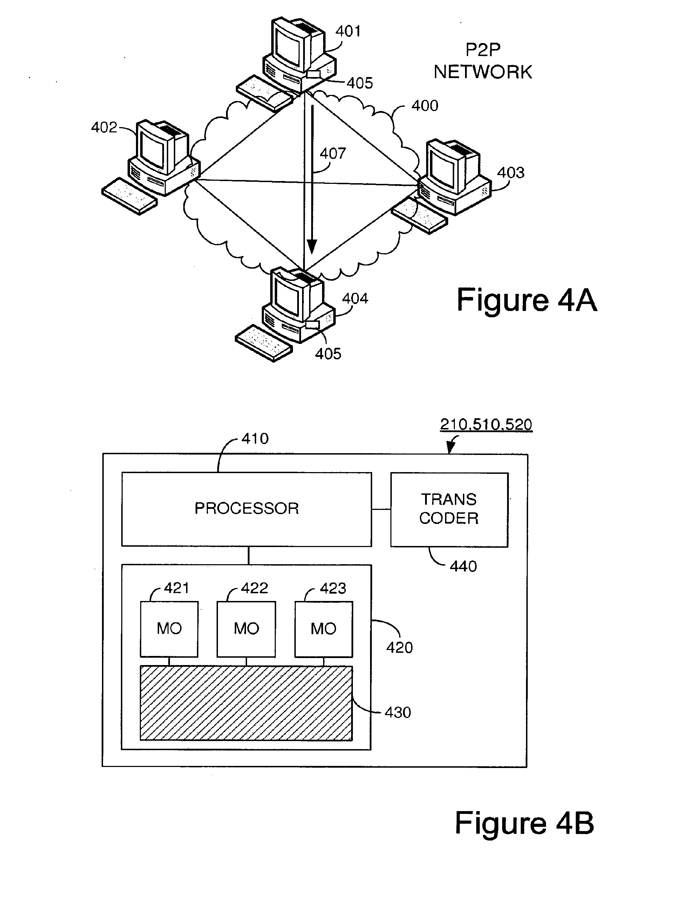

One example of this is a peer-to-peer P2P network. Figure 4a illustrates a P2P network 400 comprising a plurality of terminals 401, 402, 403, 404. In this example all terminals 401-404 are connected to each other fully meshed. The content delivery system (210) corresponds here to any of the terminals 401-404. Assuming that a mobile object 405 is located in terminal 401, the mobile object 405 may decide to move itself in action 407 to another terminal 404.

Another example are portable devices such as PDAs, smart phones, game consoles and so on. The portable devices can themselves be content delivery systems and part of the content delivery network 100, but can also be a portable device only adapted to receive and execute mobile objects. In principle, the portable devices can in addition comprise a client that itself can request content from the content delivery network 100.

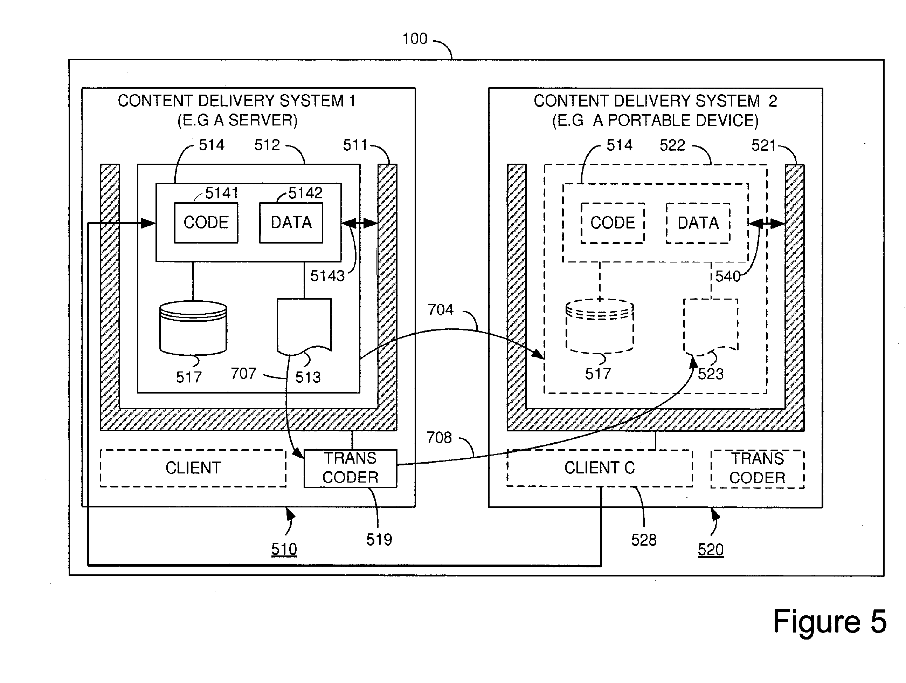

Figure 5 illustrates a first content delivery system 510 and a second content delivery system 520 having limited capabilities, such as a portable device. The first content delivery system 510 is here a server but could in principle also be a portable device.

The first content delivery system 510 comprises an execution environment 511, at least one mobile object 512 adapted to run in the execution environment 511. The mobile object 512 in turn comprises execution logic 514, a policy data base 517 and a media file 513. The execution logic 514 is also adapted to monitor in action 5143 data related to the execution environment 511. The first content delivery system 510 further comprises a transcoder 519 adapted to transcode the media files 513.

The term transcode does here include various types of transformation of the media file 513. If for example the media file 513 is a video file, transcoding can mean digitally compressing, changing sample rate, converting between different coding formats etc.

The second content delivery system 520 comprises an execution environment 521 adapted for mobile objects. It further comprises an execution interface 540 to the execution logic 521 that is adapted so that mobile objects 522 can access information about the capabilities of the second content delivery system 520. In addition, the second content delivery system 520 optionally comprises a client C 528.

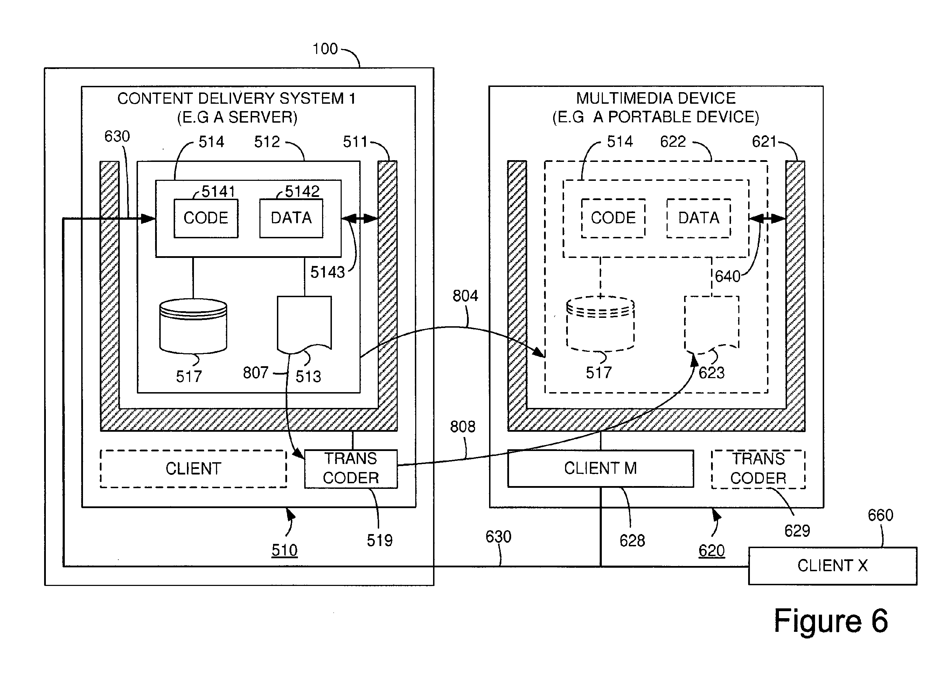

Figure 6 illustrates a first content delivery system 510 as in Figure 5, but the second content delivery system 520 is replaced by a multimedia device, here another portable device 620. One difference between the second content delivery system 520 and the portable device 620 is that the second content delivery system 520 is part of the content delivery network 100, whereas the portable device 620 is not. The portable device 620 comprises however an execution environment 621 adapted for executing mobile objects and an execution interface 640. In addition it comprises a client M 628. The client M 628 in the portable device 620 is further adapted to send requests 630 to the first content delivery system 510.

The client X 660 is a traditional client that can access the media file 513 but is neither part of the content delivery network 100 nor having capabilities of executing mobile objects.

When sending the mobile object 512 from the first content delivery system 510 to the second content delivery system 520 or the multimedia device 620, a number of considerations have to be made with regard to the capabilities of this system 520 and this device 620. The capabilities can be limited by the system/device 520,620 itself such as screen resolution, processing power, memory, supporting decoding types, battery life-time etc. Other capabilities can be network related such as link capacity and link costs (especially for wireless devices). If for example the media file 513 is a high definition video file, this video file may be unsuitable for being presented on a small wireless smart phone screen. Alternatively, the link capacity between the first content delivery system 510 and the system/device 520,620 can be limited (such as low bandwidth) which makes the distribution too slow. To overcome this, the invention includes the feature to transcode in action 707 the media file 513 to a format more suitable for the system/device 520,620 prior sending it in action 708 to the system/device 520,620.

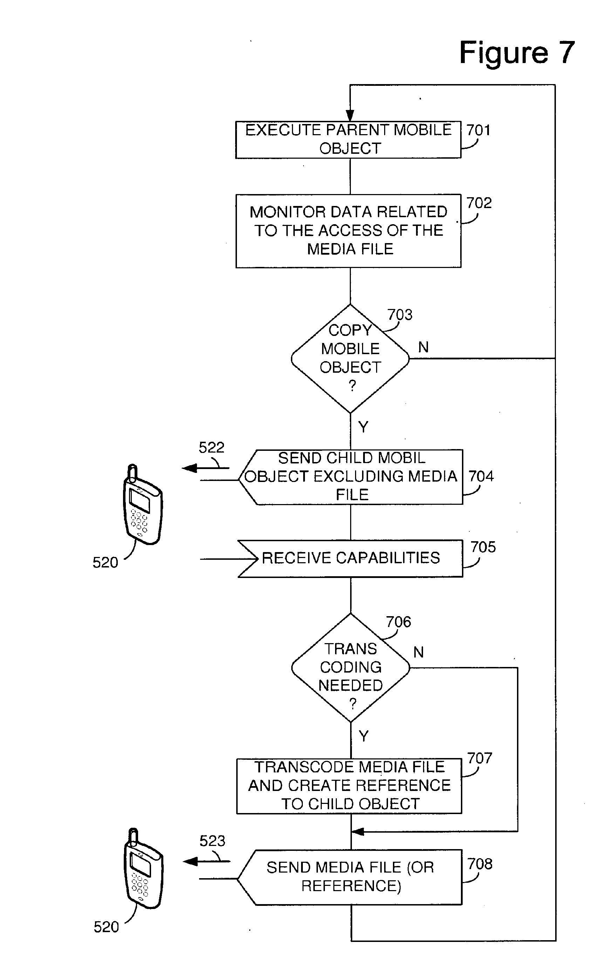

The method to place content in a content delivery system 520 having limited capabilities is illustrated more in detail in by the flow chart in Figure 7. The original mobile object 512 (here called a parent mobile object) executes in step 701 in the content delivery system 510. During execution, the mobile object 512 monitors in step 702 data related to the client's access of the media file 513. In step 703 a check is made if the mobile object 512 needs to be copied. If not, the mobile object 512 continues to execute in step 701. If yes, the mobile object 512 creates and sends in step 704 a copy 522 of itself (here called a child mobile object), excluding the media file 513 to the content delivery system 520.

When the child mobile object 522 is received by the content delivery system 520, it starts to collect information about the capabilities in the system 520. This can be done by simple system calls within the system 520 and can also include network probing. The probing can be performed as measurements between the child mobile object 522 and the parent mobile object 512 in the content delivery system 510 to detect current link conditions such as bandwidth etc.

When the information of the capabilities has been collected by the child mobile object 522 in the content delivery system 520, it returns this information in step 705 in a message to the parent mobile object 512 in the content delivery system 510.

The parent mobile object 512 determines in step 706 if transcoding is necessary. If not, the media file 513 is sent unchanged in step 708 to the child mobile object 522. This can for example be the case when the content delivery system 520 itself can perform the transcoding. If transcoding is needed in step 706, the media file 513 is transcoded in step 707 by the transcoder 519 and sent in step 708 to the child mobile object 522. The execution of the parent mobile object 512 is continued as before in step 701.

In addition to transcode the media file 513 in step 707, optionally a reference between the parent mobile object 512 and the child mobile object 522 is created and stored in the parent mobile object 512. The use of this reference will be discussed more in detail further below.

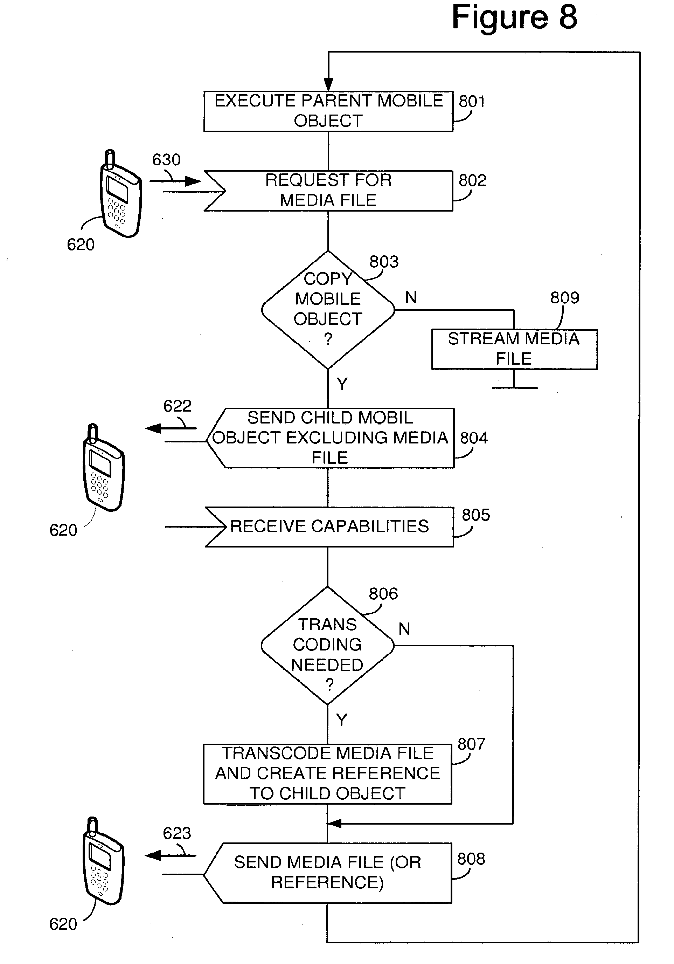

The method to place content in the multimedia device 620 is illustrated more in detail by the flow chart in Figure 8. The parent mobile object 512 executes in step 801 in the content delivery system 510. At some point in time, the mobile object 512 receives in step 802 a request 630 from the client M 628 in the portable device 620 for the media file 513. The parent mobile object 512 can interrogate its policy data base 517 and in step 803 decide to stream the media file 513 in step 809 or to send in step 804 a copy 622 of itself (a child mobile object), to the multimedia device 620, but where the media file 513 is excluded.

The knowledge that the client M 628 is residing in a portable device 620 can be determined, for example, by analyzing the HTTP request and identifying the specific portable device's browser. The ability to execute mobile objects can for example be determined by receiving an explicit indication in the request 630.

When the information of the capabilities of the portable device 620 has been collected by the child mobile object 622, it returns this information in step 805 in a message to the parent mobile object 512.

The parent mobile object 512 determines in step 806 if transcoding is necessary. If not, the media file 513 is sent unchanged in step 808 to the child mobile object 622. This can for example be the case when the portable device 620 itself can perform the transcoding. If transcoding is needed in step 806, the media file 513 is transcoded in step 807 by the transcoder 519 to a transcoded media file 523 and sent in step 808 to the child mobile object 622 in the portable device 620. The execution of the parent mobile object 512 is continued as before in step 801.

As a further option, a user of the portable device 620 can specify some parameters related to the capabilities of the device 620 to be used for playback of the content. These parameters can be accessed by the child mobile object 622. The parameters can for example comprise an override parameter that says that irrespectively of the capabilities of the portable device 620, the media file 513 should be delivered unchanged. This option could be used when the user desires to receive the full media file 513 but intends to transfer it locally to another device having a more suitable display such as a desktop computer or a HDTV set. By returning the overridden parameter in step 805, the parent mobile object 512 considers this in step 806 and sends in step 808 the media file 513 unchanged to the child mobile object 622.

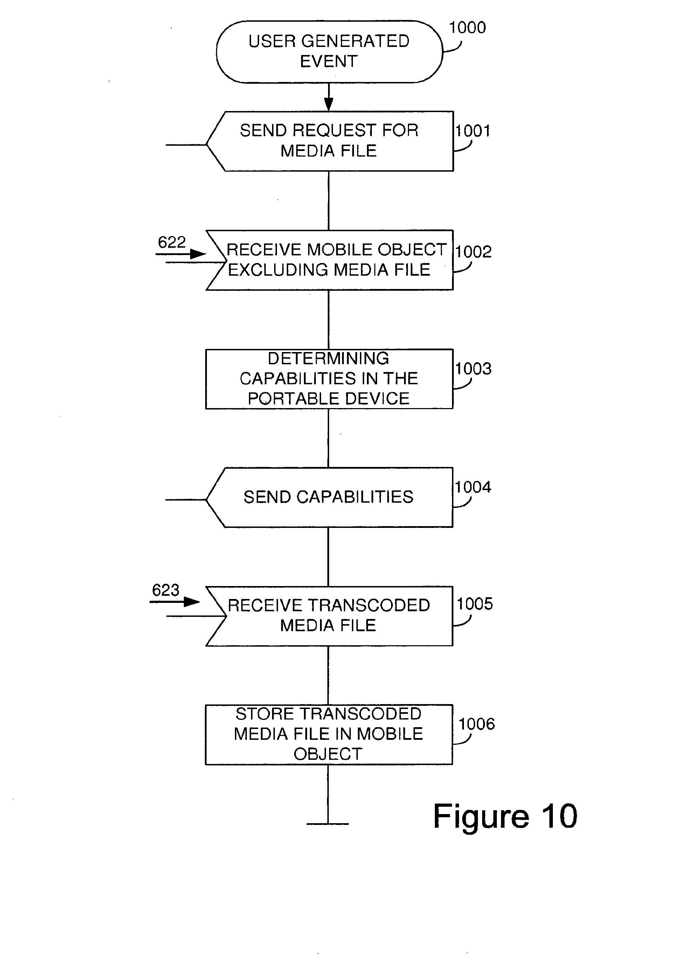

The method to receive content in the portable device 620 seen from the portable device's 620 point of view is illustrated by the flow chart in Figure 10. The event that triggers the method in step 1000 is normally a user of the portable device 620 who wants to access some sort of multimedia, such as a video film. The portable device 620 sends a request to the content delivery system 510 in step 1001. Instead of receiving a streamed video film, the portable device 620 receives the child mobile object 622, excluding the media file 513.

When receiving the child mobile object 622, the portable device 620 starts in step 1003 to collect information about the capabilities in the device 620. This can be done by simple system calls within the device 620 and can also include probing. The probing can be performed as measurements between the child mobile object 622 and the parent mobile object 512 in the content delivery system 510 to detect current link conditions such as bandwidth, packet loss etc. When the information of the capabilities has been collected by the child mobile object 622, it returns this information in step 1004 in a message to the parent mobile object 512. After that the parent mobile object 512 has determined that the original media file 513 needs to be transcoded, it transcodes the media file 513 to a new transcoded media file 623 and sends that to the child mobile object 622 in the portable device 620. After that the child mobile object 622 has received the transcoded media file 623 in step 1005, it stores it in step 1006.

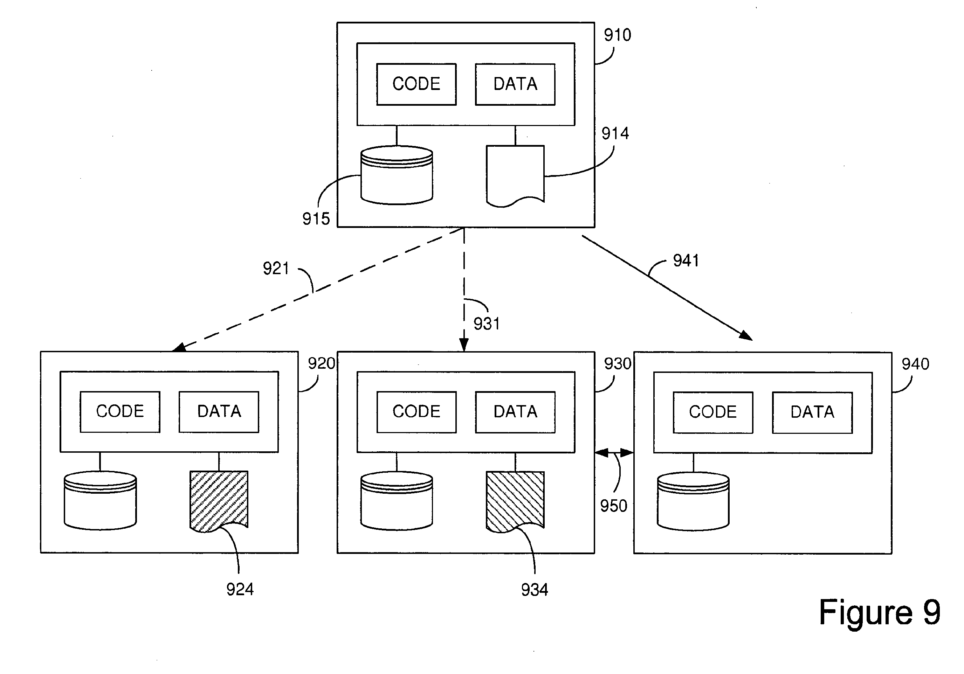

If the child mobile object 622 includes a transcoded media file 623 different from the original media file 513, the child mobile object 622 is no longer the same as the original parent mobile object 512. Figure 9 illustrates this situation. The parent mobile object 910 comprises an original media file 914. The parent mobile object 910 can further generate at least one child object 920,930,940. The two child mobile objects 920,930 are shown comprising a transcoded media file 924,934 (hatched) respectively which are different from the original media file 914. The transcoded media file 624,634 can also be different compared to each other (different hatch). The child mobile object 940 is generated but has not yet received any transcoded media file from the parent mobile object 910. The new child mobile objects 920,930 become part of the content delivery network 100 and can continue to execute, move, copy and delete themselves as the parent object 910.

An alternative for the parent mobile object 910 to transcode the media file 914 before sending it to the third mobile object 940 is to refer to an already existing transcoded media file 924,934 in an already existing child mobile object 920,930. This is done by storing references 921,931 to the child objects 920,930 in the parent mobile object 910.

In the case with the third child mobile object 940, the parent mobile object 910 can for example decide to send in action 941 the reference 931 to the child mobile object 930 instead of sending a transcoded media file. The procedure to do this is similar to the procedure illustrated by the flow chart in Figure 8, but with the difference that the parent mobile object 910 in step 808 sends the reference 931 to the child mobile object 940 instead of transcoding the original media file 914 in step 807 and sending the transcoded media file in step 808. It is then up to the child mobile object 940 to contact the other child mobile object 930 in action 950 and request a transfer of a copy of the transcoded media file 934. This latter scenario is suitable when the two children mobile objects 940,930 posses enough resources such as bandwidth to perform this transfer.

The parent mobile object 910 is adapted to keep the references 921, 931 alive only if certain conditions are met. If the parent mobile object 910 judges that the available bandwidth or the processing power for the systems or devices carrying the child objects 920,930 is too restricted, it may erase the references 921,931. The parent mobile object 910 can also erase the references 921,931 when no request relating to the existing transcoded media files 924,934 has been received for a certain period of time.

Fig 4b illustrates an example of an implementation of the content delivery system 210,510,520. The system 210,510,520 comprises a processor 410 designed to execute software in a memory area 420. This memory area 420 comprises an execution environment 430 and at least one mobile object MO 421, 422, 423. Each of the mobile object 421, 422, 423 is adapted to communicate with the execution environment 430. The content delivery system 210,510,520 also includes a transcoder unit 440. This transcoder unit 440 is used for transcoding the media file 513 when necessary as described above.

The invention does also include a multimedia device 620 for playing media files 523 received from the content delivery system 510. This device is illustrated in Figure 6.

The multimedia device 620 comprises a client 628. Triggered by a user event in step 1000 (see flow chart in Figure 10) this client 628 sends in step 1001 a request 630 for the media file 513 located in the mobile object 512 in the content delivery system 510. In order to receive and execute mobile objects 622 in step 1002, the multimedia device 620 is provided with an execution environment 621 for mobile objects 622.

Certain requested media files 513 may not be suitable to be played on the multimedia device 620 due to limited screen resolution, processing power, memory, supporting decoding types, battery life-time etc. In order to overcome this, the execution environment 621 in the multimedia device 620 is provided with an execution interface (640) accessible by the mobile object (622). Through this execution interface (640) the mobile object (622) can access information about the capabilities of the multimedia device 620. This information is sent to the mobile object 512 in the content delivery system 510. This mobile object 512 will then, if necessary, initiate a transcoding of the media file 513 to a transcoded media file 623. The transcoded media file 623 (or the original media file 513) is then sent to and received by the multimedia device 620.

As an option, the multimedia device 620 also comprises an internal transcoder unit 629 that can transcode the original media file 513 to a transcoded media file 623.

## Claims

1. A first content delivery system (510) for delivering content to at least one client (528, 660), said first content delivery system (510) comprising a processor (410) and a memory area (420), and **characterized by** at least one mobile object (512) adapted to be stored in the memory area (420) and to be executed in the first content delivery system (510) and in at least one second content delivery system (520) and where the mobile object (512) comprises the following parts:
- a first media file (513) accessible by the clients (528,660);
- a policy data base (517);
- execution logic (514) comprising program code (5141) and a data area (5142) where the data area (5142) comprises client access data related to the clients' (528,660) access of the media file (513) and where the execution logic (514) is adapted to determine the capabilities of the second content delivery system (520) and to monitor the client access data, to interrogate the policy data base (517) and to copy the mobile object (512) excluding the first media file (513) to the second content delivery system (520) when certain conditions stored in the policy data base (517) are met by the client access data
and where the first content delivery system (510) further comprises a transcoder unit (519), adapted to transcode the first media file (513) into a second media file (523) prior the sending of the second media file (523) to the copied mobile object (522) in the second content delivery system (520).

2. A content delivery system (510) as in claim 1 further comprising an execution environment (511) adapted for mobile objects (512) and where the execution logic (514) in the mobile object (512) is further adapted (5143) to monitor data related to the execution environment (511).

3. A content delivery system (510) for delivering content to at least one client (628), said content delivery system (510) comprising a processor (410) and a memory area (420), and **characterized by** at least one mobile object (512) adapted to be stored in the memory area (420) and to be executed in the content delivery system (510) and in at least one multimedia device (620) adapted to execute mobile objects and comprising the client (628) and where the mobile object (512) comprises the following parts:
- a first media file (513) accessible by the client (628);
- a policy data base (517);
- execution logic (514) comprising program code (5141) and a data area (5142) and where the data area (5142) comprises client access data related to the client's (628) access of the media file (513) and where the execution logic (514) is adapted to receive a request for the first media file (513) from the client (628), to determine the capabilities of the multimedia device (620) and to copy the mobile object (512) excluding the first media file (513) to the multimedia device (620) when certain conditions stored in the policy data base (517) are met by the client access data
and where the content delivery system (510) further comprises a transcoder unit (519), adapted to transcode the first media file (513) into a second media file (623) prior the sending of the second media file (623) to the copied mobile object (622) in the multimedia device (620).

4. A content delivery system (510) as in claim 3 further comprising an execution environment (511) adapted for mobile objects (512) and where the execution logic (514) in the mobile object (512) is further adapted (5143) to monitor data related to the execution environment (511).

5. A multimedia device (620) for playing media files (523) received from a content delivery system (510) ***characterized in that*** it is adapted to execute mobile objects and that it comprises a client (628) adapted to request a first media file (513) located in a first mobile object (512) in the content delivery system (510) and where the multimedia device (620) is further adapted to receive a second mobile object (622) being a copy of the first mobile object (512) but excluding the first media file (513) and where the multimedia device (620) is further adapted with an execution interface (640) accessible by the received second mobile object (622) so that the second mobile object (622) can determine the capabilities of the multimedia device (620) and to return data about these capabilities to the first mobile object (512) and where the multimedia device (620) is further adapted to receive a second media file (623) from the content delivery system (510) being either equal to the first media file (513) or being a transcoded version of the first media file (513).

6. A method for placing content in a content delivery network (100) **characterized by** the steps of:
- executing (701) in a first content delivery system (510) a first mobile object (512) comprising execution logic (514), a policy data base (517) and a first media file (513) accessible by at least one client (528,660) and where the execution logic (514) comprises client access data related to the clients' (528,660) access of the first media file (513);
- monitoring (702) the client access data;
- when certain conditions stored in the policy data base (517) are met by the client access data sending (704) a copy (522) of the first mobile object (512) excluding the first media file (513) to a second content delivery system (520);
- determining (705) the capabilities of the second content delivery system (520) for receiving the first media file (513);
- transcoding (707) the first media file (513) into a second media file (523) if the second content delivery system (520) is not capable of receiving the first media file (513) and
- sending (708) the second media file (523) to the copied mobile object (522) in the second content delivery system (520).

7. A method as in claim 6 where the step of determining (705) the capabilities of the second content delivery system (520) comprises the step of receiving from the copied mobile object (522) a message comprising data about the capabilities of said second content delivery system (520).

8. A method as in claim 7 further comprising the step of creating (707) in the first mobile object (512) a reference to the copied mobile object (522).

9. A method as in any of the claims 6,7,8 where the client (528) is located in the second content delivery system (520).

10. A method for placing content in a multimedia device (620) **characterized by** the steps of:
- executing (801) in a content delivery system (510) a first mobile object (512) comprising execution logic (514), a policy data base (517) and a first media file (513) accessible by a client (628) in the multimedia device (620) and where the execution logic (514) comprises client access data related to the client's (628) access of the first media file (513);
- receiving (802) a request (630) from the client (628) to access the first media file (513);
- when certain conditions stored in the policy data base (517) are met by the client access data, sending (804) a copy (622) of the first mobile object (512) excluding the first media file (513) to the multimedia device (620);
- determining (805) the capabilities in the multimedia device (620) for receiving the first media file (513);
- transcoding (807) the first media file (513) into a second media file (623) if the multimedia device (620) is not capable of receiving the first media file (513) and
- sending (808) the second media file (623) to the copied mobile object (622) in the multimedia device (620).

11. A method as in claim 10 where the step of determining (805) the capabilities of the multimedia device (620) comprises the step of receiving from the copied mobile object (622) a message comprising data about the capabilities of said multimedia device (620).

12. A method as in claims 10 or 11 further comprising the step of creating (807) in the first mobile object (512) a reference to the copied mobile object (622).

13. A method for receiving content in a multimedia device (620) **characterized by** the steps of:
- sending (1001) from a client (628) in the multimedia device (620) a request (630) to access a first media file (513) in a first mobile object (512) in a content delivery system (510);
- receiving (1002) a second mobile object (622) that is a copy of the first mobile object (512) but excluding the first media file (513);
- determining (1003) the capabilities of the multimedia device (620);
- sending (1004) information about the capabilities to the first mobile object (512) in the content delivery system (510);
- receiving (1005) from the first mobile object (512) a second media file (623) either being equal to the first media file (513) or being a transcoded version of the first media file (513);
- storing (1006) the second media file (623) in the second mobile object (622) in the multimedia device (620).

14. A method as in claim 13 where the step of determining (1003) the capabilities of the multimedia device (620) comprises the activity of making system calls within the multimedia device (620).

15. A method as in claim 13 where the step of determining (1003) the capabilities of the multimedia device (620) comprises the activity of sending probes between the second mobile object (622) and the first mobile object (512).

## Patentansprüche

1. Erstes Inhaltslieferungssystem (510) zum Liefern von Inhalten an wenigstens einen Client (528, 660), wobei das erste Inhaltslieferungssystem (510) einen Prozessor (410) und einen Speicherbereich (420) umfasst und **gekennzeichnet ist durch** wenigstens ein mobiles Objekt (512), angepasst, um im Speicherbereich (420) gespeichert zu werden und im ersten Inhaltslieferungssystem (510) und in wenigstens einem zweiten Inhaltslieferungssystem (520) ausgeführt zu werden, und wobei das mobile Objekt (512) die folgenden Teile umfasst:
- eine erste Mediendatei (513), auf die **durch** die Clients (528, 660) zugegriffen werden kann;
- eine Richtliniendatenbank (517);
- Ausführungslogik (514) umfassend Programmcode (5141) und einen Datenbereich (5142), wobei der Datenbereich (5142) Clientzugriffsdaten bezüglich des Zugriffs der Clients (528, 660) auf die Mediendatei (513) umfasst, und wobei die Ausführungslogik (514) angepasst ist, die Fähigkeiten des zweiten Inhaltslieferungssystems (520) zu bestimmen und die Clientzugriffsdaten zu überwachen, die Richtliniendatenbank (517) zu befragen und das mobile Objekt (512) mit Ausnahme der ersten Mediendatei (513) in das zweite Inhaltslieferungssystem (520) zu kopieren, wenn bestimmte, in der Richtliniendatenbank (517) gespeicherte Bedingungen von den Clientzugriffsdaten erfüllt werden,
und wobei das erste Inhaltslieferungssystem (510) ferner eine Transcodereinheit (519) aufweist, angepasst, um die erste Mediendatei (513) in eine zweite Mediendatei (523) zu transcodieren, bevor die zweite Mediendatei (523) in das kopierte mobile Objekt (522) im zweiten Inhaltslieferungssystem (520) geschickt wird.

2. Inhaltslieferungssystem (510) nach Anspruch 1, ferner umfassend eine Ausführungsumgebung (511), angepasst für mobile Objekte (512), und wobei die Ausführungslogik (514) im mobilen Objekt (512) ferner angepasst ist (5143), Daten bezüglich der Ausführungsumgebung (511) zu überwachen.

3. Inhaltslieferungssystem (510) zum Liefern von Inhalten an wenigstens einen Client (628), wobei das Inhaltslieferungssystem (510) einen Prozessor (410) und einen Speicherbereich (420) umfasst und **gekennzeichnet ist durch** wenigstens ein mobiles Objekt (512), angepasst, um im Speicherbereich (420) gespeichert zu werden und in dem Inhaltslieferungssystem (510) und in wenigstens einem Multimediagerät (620), welches zum Ausführen mobiler Objekte angepasst ist und den Client (628) umfasst, ausgeführt zu werden, und wobei das mobile Objekt (512) die folgenden Teile umfasst:
- eine erste Mediendatei (513), auf die **durch** den Client (628) zugegriffen werden kann;
- eine Richtliniendatenbank (517);
- Ausführungslogik (514) umfassend Programmcode (5141) und einen Datenbereich (5142), und wobei der Datenbereich (5142) Clientzugriffsdaten bezüglich des Zugriffs des Clients (628) auf die Mediendatei (513) umfasst, und wobei die Ausführungslogik (514) angepasst ist, eine Anforderung für die erste Mediendatei (513) vom Client (628) zu erhalten, die Fähigkeiten des Multimediageräts (620) zu bestimmen und das mobile Objekt (512) mit Ausnahme der ersten Mediendatei (513) in das Multimediagerät (620) zu kopieren, wenn bestimmte, in der Richtliniendatenbank (517) gespeicherte Bedingungen von den Clientzugriffsdaten erfüllt werden
und wobei das Inhaltslieferungssystem (510) ferner eine Transcodereinheit (519) aufweist, angepasst, um die erste Mediendatei (513) in eine zweite Mediendatei (623) zu transcodieren, bevor die zweite Mediendatei (623) in das kopierte mobile Objekt (622) im Multimediagerät (620) geschickt wird.

4. Inhaltslieferungssystem (510) nach Anspruch 3, ferner umfassend eine Ausführungsumgebung (511), angepasst für mobile Objekte (512), und wobei die Ausführungslogik (514) im mobilen Objekt (512) ferner angepasst ist (5143), Daten bezüglich der Ausführungsumgebung (511) zu überwachen.

5. Multimediagerät (620) zum Abspielen von Mediendateien (523), die von einem Inhaltslieferungssystem (510) empfangen werden, **dadurch gekennzeichnet, dass** es angepasst ist, mobile Objekte auszuführen, und dass es einen Client (628) umfasst, der angepasst ist, eine erste Mediendatei (513) anzufordern, die sich in einem ersten mobilen Objekt (512) im Inhaltslieferungssystem (510) befindet, und wobei das Multimediagerät (620) ferner angepasst ist, ein zweites mobiles Objekt (622) zu empfangen, welches eine Kopie des ersten mobilen Objekts (512) ist, mit Ausnahme der ersten Mediendatei (513), und wobei das Multimediagerät (620) ferner mit einer Ausführungsschnittstelle (640) angepasst ist, auf die vom empfangenen zweiten mobilen Objekt (622) zugegriffen werden kann, sodass das zweite mobile Objekt (622) die Fähigkeiten des Multimediageräts (620) bestimmen kann und Daten zu diesen Fähigkeiten an das erste mobile Objekt (512) zurückgeben kann, und wobei das Multimediagerät (620) ferner angepasst ist, eine zweite Mediendatei (623) aus dem Inhaltslieferungssystem (510) zu empfangen, die entweder mit der ersten Mediendatei (513) identisch oder eine transcodierte Version der ersten Mediendatei (513) ist.

6. Verfahren zum Platzieren von Inhalten in einem Inhaltslieferungsnetzwerk (100), **gekennzeichnet durch** die folgenden Schritte:
- Ausführen (701) eines ersten mobilen Objekts (512) in einem ersten Inhaltslieferungssystem (510), umfassend eine Ausführungslogik (514), eine Richtliniendatenbank (517) und eine erste Mediendatei (513), auf die **durch** wenigstens einen Client (528, 660) zugegriffen werden kann, und wobei die Ausführungslogik (514) Clientzugriffsdaten bezüglich des Zugriffs der Clients (528, 660) zur ersten Mediendatei (513) umfasst;
- Überwachen (702) der Clientzugriffsdaten;
- wenn bestimmte, in der Richtliniendatenbank (517) gespeicherte Bedingungen von den Clientzugriffsdaten erfüllt werden, Senden (704) einer Kopie (522) des ersten mobilen Objekts (512) mit Ausnahme der ersten Mediendatei (513) an ein zweites Inhaltslieferungssystem (520);
- Bestimmen (705) der Fähigkeiten des zweiten Inhaltslieferungssystems (520) zum Empfangen der ersten Mediendatei (513);
- Transcodieren (707) der ersten Mediendatei (513) in eine zweite Mediendatei (523), falls das zweite Inhaltslieferungssystem (520) nicht fähig ist, die erste Mediendatei (513) zu empfangen, und
- Senden (708) der zweiten Mediendatei (523) an das kopierte mobile Objekt (522) im zweiten Inhaltslieferungssystem (520).

7. Verfahren nach Anspruch 6, wobei der Schritt des Bestimmens (705) der Fähigkeiten des zweiten Inhaltslieferungssystems (520) den Schritt des Empfangens einer Nachricht vom kopierten mobilen Objekt (522) umfasst, die Daten über die Fähigkeiten des zweiten Inhaltslieferungssystems (520) umfasst.

8. Verfahren nach Anspruch 7, ferner umfassend den Schritt des Erstellens (707) im ersten mobilen Objekt (512) eines Bezugs zum kopierten mobilen Objekt (522).

9. Verfahren nach einem der Ansprüche 6, 7, 8, wobei der Client (528) im zweiten Inhaltslieferungssystem (520) angeordnet ist.

10. Verfahren zum Platzieren von Inhalten in einem Multimediagerät (620), **gekennzeichnet durch** die folgenden Schritte:
- Ausführen (801) eines ersten mobilen Objekts (512) in einem ersten Inhaltslieferungssystem (510), umfassend eine Ausführungslogik (514), eine Richtliniendatenbank (517) und eine erste Mediendatei (513), auf die **durch** einen Client (628) in einem Multimediagerät (620) zugegriffen werden kann, und wobei die Ausführungslogik (514) Clientzugriffsdaten bezüglich des Zugriffs des Clients (628) auf die erste Mediendatei (513) umfasst;
- Empfangen (802) einer Anforderung (630) vom Client (628), auf die erste Mediendatei (513) zuzugreifen;
- wenn bestimmte, in der Richtliniendatenbank (517) gespeicherte Bedingungen von den Clientzugriffsdaten erfüllt werden, Senden (804) einer Kopie (622) des ersten mobilen Objekts (512) mit Ausnahme der ersten Mediendatei (513) an ein Multimediagerät (620);
- Bestimmen (805) der Fähigkeiten des Multimediageräts (620) zum Empfangen der ersten Mediendatei (513);
- Transcodieren (807) der ersten Mediendatei (513) in eine zweite Mediendatei (623), falls das Multimediagerät (620) nicht fähig ist, die erste Mediendatei (513) zu empfangen und
- Senden (808) der zweiten Mediendatei (623) an das kopierte mobile Objekt (622) im Multimediagerät (620).

11. Verfahren nach Anspruch 10, wobei der Schritt des Bestimmens (805) der Fähigkeiten des Multimediageräts (620) den Schritt des Empfangens einer Nachricht vom kopierten mobilen Objekt (622) umfasst, die Daten über die Fähigkeiten des zweiten Inhaltslieferungssystems (620) umfasst.

12. Verfahren nach Anspruch 10 oder 11, ferner umfassend den Schritt des Erstellens (807) eines Bezugs zum kopierten mobilen Objekt (622) im ersten mobilen Objekt (512).

13. Verfahren zum Empfangen von Inhalt in einem Multimediagerät (620), **gekennzeichnet durch** die folgenden Schritte:
- Senden (1001) einer Anforderung (630) zum Zugriff auf eine erste Mediendatei (513) in einem ersten mobilen Objekt (512) in einem Inhaltslieferungssystem (510) von einem Client (628) im Multimediagerät (620);
- Empfangen (1002) eines zweiten mobilen Objekts (622), welches eine Kopie des ersten mobilen Objekts (512) mit Ausnahme der ersten Mediendatei (513) ist;
- Bestimmen (1003) der Fähigkeiten des Multimediageräts (620);
- Senden (1004) von Informationen über die Fähigkeiten des ersten mobilen Objekts (512) im Inhaltslieferungssystem (510);
- Empfangen (1005) einer zweiten Mediendatei (623) **durch** das erste mobile Objekt (512), die entweder mit der ersten Mediendatei (513) identisch oder eine transcodierte Version der ersten Mediendatei (513) ist;
- Speichern (1006) der zweiten Mediendatei (623) im zweiten mobilen Objekt (622) im Multimediagerät (620).

14. Verfahren nach Anspruch 13, wobei der Schritt des Bestimmens (1003) der Fähigkeiten des Multimediageräts (620) den Vorgang umfasst, Systemaufrufe innerhalb des Multimediageräts (620) vorzunehmen.

15. Verfahren nach Anspruch 13, wobei der Schritt des Bestimmens (1003) der Fähigkeiten des Multimediageräts (620) den Vorgang umfasst, Anfragen zwischen dem zweiten mobilen Objekt (622) und dem ersten mobilen Objekt (512) zu verschicken.

## Revendications

1. Premier système de distribution de contenu (510) pour distribuer un contenu à au moins un client (528, 660), ledit premier système de distribution de contenu (510) comprenant un processeur (410) et une zone de mémorisation (420), et **caractérisé par** au moins un objet mobile (512) qui est à même d'être stocké dans la zone de mémorisation (420) et d'être exécuté dans le premier système de distribution de contenu (510) et dans au moins un second système de distribution de contenu (520) et où l'objet mobile (512) comprend les parties suivantes :
- un premier fichier de média (513) accessible par les clients (528, 660) ;
- une base de données de politique (517) ;
- un circuit logique d'exécution (514) comprenant un code de programme (5141) et une zone de données (5142), où la zone de données (5142) comprend des données d'accès clients rapportées à l'accès des clients (528, 660) du fichier de média (513) et où le circuit logique d'exécution (514) est à même de déterminer les capacités du second système de distribution de contenu (520) et de surveiller les données d'accès clients, d'interroger la base de données de politique (517) et de copier l'objet mobile (512), à l'exclusion du premier fichier de média (513), sur le second système de distribution de contenu (520) lorsque certaines conditions stockées dans la base de données de politique (517) sont rencontrées par les données d'accès clients,
et où le premier système de distribution de contenu (510) comprend en outre une unité de transcodage (519) qui est à même de transcoder le premier fichier de média (513) dans un second fichier de média (523) avant l'expédition du second fichier de média (523) à l'objet mobile copié (522) dans le second système de distribution de contenu (520).

2. Système de distribution de contenu (510) selon la revendication 1, comprenant en outre un environnement d'exécution (511) qui est adapté aux objets mobiles (512) et dans lequel le circuit logique d'exécution (514) de l'objet mobile (512) est en outre adapté (5143) à la surveillance de données se rapportant à l'environnement d'exécution (511).

3. Système de distribution de contenu (510) pour distribuer un contenu à au moins un client (628), ledit système de distribution de contenu (510) comprenant un processeur (410) et une zone de mémorisation (420), et **caractérisé par** au moins un objet mobile (512) qui est à même d'être stocké dans la zone de mémorisation (420) et d'être exécuté dans le système de distribution de contenu (510) et dans au moins un dispositif multimédia (620) qui est à même d'exécuter des objets mobiles et comprenant le client (628) et où l'objet mobile (512) comprend les parties suivantes :
- un premier fichier de média (513) accessible par le client (628) ;
- une base de données de politique (517) ;
- un circuit logique d'exécution (514) comprenant un code de programme (5141) et une zone de données (5142), où la zone de données (5142) comprend des données d'accès client rapportées à l'accès du client (628) du fichier de média (513) et où le circuit logique d'exécution (514) est à même de recevoir une demande pour le premier fichier de média (513) du client (628), de déterminer les capacités du dispositif multimédia (620) et de copier l'objet mobile (512), à l'exclusion du premier fichier de média (513), sur le dispositif multimédia (620) lorsque certaines conditions stockées dans la base de données de politique (517) sont rencontrées par les données d'accès client,
et où le système de distribution de contenu (510) comprend en outre une unité de transcodage (519) qui est à même de transcoder le premier fichier de média (513) dans un second fichier de média (623) avant l'expédition du second fichier de média (623) à l'objet mobile copié (622) dans le dispositif multimédia (620).

4. Système de distribution de contenu (510) selon la revendication 3, comprenant en outre un environnement d'exécution (511) qui est adapté aux objets mobiles (512) et dans lequel le circuit logique d'exécution (514) de l'objet mobile (512) est en outre adapté (5143) à la surveillance de données se rapportant à l'environnement d'exécution (511).

5. Dispositif multimédia (620) pour faire jouer des fichiers de média (523) reçus d'un système de distribution de contenu (510), **caractérisé en ce qu'**il est à même d'exécuter des objets mobiles et **en ce qu'**il comprend un client (628) qui est à même de demander un premier fichier de média (513) situé dans un premier objet mobile (512) dans le système de distribution de contenu (510) et dans lequel le dispositif multimédia (620) est encore à même de recevoir un second objet mobile (622) qui est une copie du premier objet mobile (512), mais à l'exclusion du premier fichier de média (513) et dans lequel le dispositif multimédia (620) est en outre adapté à une interface d'exécution (640) accessible par le second objet mobile reçu (622) de sorte que le second objet mobile (622) puisse déterminer les capacités du dispositif multimédia (620) et renvoyer des données sur ces capacités au premier objet mobile (512) et dans lequel le dispositif multimédia (620) est encore à même de recevoir un second fichier de média (623) du système de distribution de contenu (510), qui est égal au premier fichier de média (513) ou qui est une version transcodée du premier fichier de média (513).

6. Procédé de mise en place d'un contenu dans un réseau de distribution de contenu (100), **caractérisé par** les étapes consistant à :
- exécuter (701) dans un premier système de distribution de contenu (510) un premier objet mobile (512) comprenant un circuit logique d'exécution (514), une base de données de politique (517) et un premier fichier de média (513) accessible par au moins un client (528, 660) et dans lequel le circuit logique d'exécution (514) comprend des données d'accès clients apparentées à l'accès des clients (528, 660) du premier fichier de média (513) ;
- surveiller (702) les données d'accès clients ;
- lorsque certaines conditions stockées dans la base de données de politique (517) sont rencontrées par les données d'accès clients, envoyer (704) une copie (522) du premier objet mobile (512), à l'exclusion du premier fichier de média (513), à un second système de distribution de contenu (520) ;
- déterminer (705) les capacités du second système de distribution de contenu (520) pour recevoir le premier fichier de média (513) ;
- transcoder (707) le premier fichier de média (513) dans un second fichier de média (523) si le second système de distribution de contenu (520) n'est pas à même de recevoir le premier fichier de média (513), et
- envoyer (708) le second fichier de média (523) à l'objet mobile copié (522) dans le second système de distribution de contenu (520).

7. Procédé selon la revendication 6, dans lequel l'étape de détermination (705) des capacités du second système de distribution de contenu (520) comprend l'étape de réception de l'objet mobile copié (522) d'un message comprenant des données sur les capacités dudit second système de distribution de contenu (520).

8. Procédé selon la revendication 7, comprenant en outre l'étape de création (707) dans le premier objet mobile (512) d'une référence à l'objet mobile copié (522).

9. Procédé selon l'une quelconque des revendications 6, 7, 8, où le client (528) est situé dans le second système de distribution de contenu (520).

10. Procédé de mise en place d'un contenu dans un dispositif multimédia (620), **caractérisé par** les étapes consistant à :
- exécuter (801) dans un système de distribution de contenu (510) un premier objet mobile (512) comprenant un circuit logique d'exécution (514), une base de données de politique (517) et un premier fichier de média (513) accessible par un client (628) dans le dispositif multimédia (620) et dans lequel le circuit logique d'exécution (514) comprend des données d'accès client apparentées à l'accès du client (628) du premier fichier de média (513) ;
- recevoir (802) une demande (630) du client (628) d'accéder au premier fichier de média (513) ;
- lorsque certaines conditions stockées dans la base de données de politique (517) sont rencontrées par les données d'accès client, envoyer (804) une copie (622) du premier objet mobile (512), à l'exclusion du premier fichier de média (513), au dispositif multimédia (620) ;
- déterminer (805) les capacités du dispositif multimédia (620) pour recevoir le premier fichier de média (513) ;
- transcoder (807) le premier fichier de média (513) dans un second fichier de média (623) si le dispositif multimédia (620) n'est pas à même de recevoir le premier fichier de média (513), et
- envoyer (808) le second fichier de média (623) à l'objet mobile copié (622) dans le dispositif multimédia (620).

11. Procédé selon la revendication 10, dans lequel l'étape de détermination (705) des capacités du dispositif multimédia (620) comprend l'étape de réception de l'objet mobile copié (622) d'un message comprenant des données sur les capacités dudit dispositif multimédia (620).

12. Procédé selon la revendication 10 ou la revendication 11, comprenant en outre l'étape de création (807) dans le premier objet mobile (512) d'une référence à l'objet mobile copié (622).

13. Procédé de réception d'un contenu dans un dispositif multimédia (620), **caractérisé par** les étapes consistant à :
- envoyer (1001) d'un client (628) dans le dispositif multimédia (620) une demande (630) d'accéder à un premier fichier de média (513) dans un premier objet mobile (512) d'un système de distribution de contenu (510) ;
- recevoir (1002) un second objet mobile (622) qui est une copie du premier objet mobile (512), mais à l'exclusion du premier fichier de média (513) ;
- déterminer (1003) les capacités du dispositif multimédia (620) ;
- envoyer (1004) des informations sur les capacités au premier objet mobile (512) dans le système de distribution de contenu (510) ;
- recevoir (1005) du premier objet mobile (512) un second fichier de média (623) qui est égal au premier fichier de média (513) ou qui est une version transcodée du premier fichier de média (513) ; et
- stocker (1006) le second fichier de média (623) dans le second objet mobile (622) dans le dispositif multimédia (620).

14. Procédé selon la revendication 13, dans lequel l'étape de détermination (1003) des capacités du dispositif multimédia (620) comprend l'activité d'effectuer des appels de système dans le dispositif multimédia (620).

15. Procédé selon la revendication 13, dans lequel l'étape de détermination (1003) des capacités du dispositif multimédia (620) comprend l'activité d'envoyer des sondes entre le second objet mobile (622) et le premier objet mobile (512).
